# FASCICULE DE BREVET EUROPEEN

(11) **EP 2 652 900 B1**
(45) Date de publication et mention de la délivrance du brevet: **25.03.2020**
(21) Numéro de dépôt: 11811060.0
(22) Date de dépôt: 09.12.2011
(51) Int. Cl.: H04L 9/32

(54) **PROCEDE D'AUTHENTIFICATION D'UN UTILISATEUR D'UN TERMINAL AUPRES D'UN FOURNISSEUR DE SERVICES**
VERFAHREN ZUR AUTHENTIFIZIERUNG EINES BENUTZERS EINES ENDGERÄTS HINSICHTLICH EINES DIENSTANBIETERS
METHOD FOR AUTHENTICATING A USER OF A TERMINAL WITH RESPECT TO A SERVICE PROVIDER

(30) Priorité: 16.12.2010 FR 1060589
(43) Date de publication de la demande: 23.10.2013
(73) Titulaire: Orange, 75015 Paris (FR)
(72) Inventeur: AILLERY, Nicolas, F-35000 Rennes (FR); BAILLEUX, Benoît, F-22300 Ploubezre (FR); LE ROUZIC, Jean-Pierre, F-35700 Rennes (FR)
(86) Numéro de dépôt international: PCT/FR2011/052913
(87) Numéro de publication internationale: WO 2012/080625

(56) Documents cités:
- FR-A1- 2 944 400
- US-A1- 2009 288 148
- MCCUNE J M ET AL: "Seeing-Is-Believing: Using Camera Phones for Human-Verifiable Authentication", SECURITY AND PRIVACY, 2005 IEEE SYMPOSIUM ON OAKLAND, CA, USA 08-11 MAY 2005, PISCATAWAY, NJ, USA,IEEE, 8 mai 2005 (2005-05-08), pages 110-124, XP010798367, DOI: DOI:10.1109/SP.2005.19 ISBN: 978-0-7695-2339-2
- Eric Gieseke ET AL: "Secure Web Authentication with Mobile Phones Using Keyed Hash Authentication", CSCI E 170 Computer Security and Usability, 11 janvier 2005 (2005-01-11), pages 1-13, XP055000517, Extrait de l'Internet: URL:http://simson.net/ref/2004/csci_e-170/ handouts/final/egieseke-john_mclaughlin_pa per.pdf [extrait le 2011-06-10]

## Description

### Domaine technique

L'invention se rapporte à un procédé d'authentification d'un utilisateur d'un terminal auprès d'un fournisseur de services.

Le terminal en question englobe tout dispositif de traitement de données, c'est-à-dire équipé de ressources physiques et/ou logicielles dont au moins un microprocesseur, apte à communiquer au travers d'un réseau de communication.

Ce réseau peut être par exemple le réseau Internet.

L'invention s'applique tout particulièrement aux terminaux ne disposant pas de moyens de saisie de données, ou lorsqu'ils en disposent, de moyens de saisie peu ou pas adaptés à la saisie de données d'authentification. Le terminal est par exemple un téléviseur apte à communiquer au travers d'un réseau de communication tel que le réseau Internet.

### Etat de la technique

L'ensemble des fournisseurs de services offre à ses clients un accès à des services personnalisés. Un service personnalisé est par exemple l'envoi d'un contenu multimédia (film, musique, etc.), l'envoi d'une page internet incluant des données relatives au compte d'un client utilisateur, etc. Cet accès nécessite une authentification.

Pour accéder au service, d'une manière générale, l'utilisateur utilise un terminal équipé de moyens de saisie avec lesquels il peut saisir des données d'identification et/ou d'authentification telles qu'un identifiant et un mot de passe. A réception, le fournisseur vérifie l'identifiant et le mot de passe et autorise l'accès au service si ces derniers sont corrects.

Le problème est que le terminal en question n'est pas forcément équipé de moyens pour saisir des données, ou s'il est équipé de tels moyens de saisie, ceux-ci ne sont pas forcément adaptés à la saisie de données d'authentification.

Si le terminal n'est pas équipé de moyens de saisie, le service ne peut pas être utilisé via ce terminal car le fournisseur n'a aucun moyen d'authentifier l'utilisateur du compte qui souhaite utiliser le terminal pour l'utilisation d'un service.

Si le terminal est équipé de moyens de commande mais que ceux-ci ne sont pas adaptés à la saisie de données d'authentification, le service peut être utilisé via le terminal mais moyennant une saisie pénible, et source d'erreurs, de données d'authentification telles qu'un identifiant et un mot de passe. Les moyens de commande sont par exemple une télécommande lorsque le terminal est une télévision.

La demande de brevet FR2944400 et le document Eric Gieseke ET AL: "Secure Web Authentication with Mobile Phones Using Keyed Hash Authentication", CSCI E 170 Computer Security and Usability, 11 janvier 2005, pages 1-13, XP055000517, ont pour objet des procédés d'authentification d'un premier terminal utilisant un second terminal pour s'authentifier.

L'invention vient améliorer la situation.

### L'invention

A cet effet, selon un aspect fonctionnel, l'invention a trait à un procédé d'authentification tel que défini dans la revendication 1.

L'invention réutilise donc, pour l'authentification d'un utilisateur vis-à-vis d'un premier terminal, des données d'authentification issues d'une authentification déjà réalisée de l'utilisateur vis-à-vis d'un premier terminal. L'invention évite ainsi une nouvelle authentification et donc une nouvelle saisie de données d'authentification parfois pénible vu les moyens de saisie dont dispose l'utilisateur, par exemple une télécommande d'un téléviseur.

Il n'est donc plus nécessaire que le premier terminal soit équipé de moyens de saisie pour la saisie de données d'authentification dans le but d'être authentifié auprès d'un fournisseur de service. Un appariement n'est pas non plus nécessaire entre le premier et le second terminal pour permettre au premier terminal de bénéficier des données d'authentification provenant du second terminal.

Lorsque le premier et le second terminal sont aptes à communiquer au travers du premier réseau de communication, et que le second terminal est apte à recevoir, depuis le premier terminal, des données via un deuxième réseau de communication de courte portée, selon un mode de mise en œuvre particulier de l'invention, le procédé comprend les étapes suivantes :
- une étape de réception, par le second terminal, d'une demande de fourniture de données d'authentification issue du premier terminal via le deuxième réseau ;
- une étape de transmission de données d'authentification depuis le second terminal via le premier réseau.

Ainsi, le premier terminal transmet une demande de fourniture de données au second terminal par le biais du deuxième réseau de courte portée. Ce réseau de courte portée est une garantie de la proximité du même utilisateur relativement au premier terminal et au second terminal. Cette caractéristique assure que l'utilisateur qui manipule le premier et le second terminal est le même et non pas un tiers malveillant tentant de s'authentifier grâce aux données d'authentification du second terminal.

Ensuite, les données d'authentification sont transmises par le deuxième terminal via un réseau que le second terminal et le fournisseur de services ont en commun.

Il faut noter ici que les données d'authentification précitées obtenues grâce au second terminal sont des données reconnues par le fournisseur de service par exemple parce que le fournisseur qui a authentifié l'utilisateur vis-à-vis du second terminal est le même fournisseur que souhaite utiliser l'utilisateur pour recevoir un service sur le premier terminal.

Selon une première variante de ce mode de mise en œuvre, la demande de données d'authentification issue du premier terminal inclut une adresse de destination, sur le premier réseau, pour l'envoi des données d'authentification.

Cette variante de mise en œuvre de l'invention permet au second terminal de savoir où, sur le premier réseau, il doit transmettre les données d'authentification. Dans notre exemple, on verra que la destination est une entité connectée au premier réseau. Cette entité aura pour charge ensuite de fournir ces données d'authentification pour permettre à l'utilisateur du premier terminal d'être authentifié et recevoir le service sur le premier terminal.

Selon une deuxième variante, qui pourra être mis en œuvre alternativement ou cumulativement avec la précédente variante, l'étape de demande fourniture de données d'authentification est précédée d'une étape de demande par le premier terminal d'un identifiant de transaction à une entité apte à délivrer des identifiants de transaction, et les données transmises par la suite inclut l'identifiant de transaction.

Grâce à cette caractéristique, l'identifiant de transaction est généré par une entité externe au terminal ; cela permet de ne pas équiper tous les premiers terminaux de programmes d'ordinateur capables de générer de tels identifiants. Dans cette configuration, le premier terminal transmet au deuxième terminal l'identifiant de transaction ; ensuite le deuxième terminal transmet l'identifiant de transaction à l'adresse de destination reçue précédemment. Comme on l'a vu précédemment, l'entité associée à l'adresse de destination a généré l'identifiant de transaction ; l'entité peut donc, lorsqu'elle reçoit l'identifiant de transaction depuis le deuxième terminal, retrouver la demande d'authentification à l'origine de la création de l'identifiant de transaction. Ainsi, l'entité reçoit depuis le deuxième terminal une preuve d'une authentification réalisée relativement au deuxième terminal qui servira à authentifier le premier terminal afin d'utiliser le premier terminal pour utiliser un service requérant une authentification préalable.

Le premier terminal peut aussi être équipé d'un émetteur de signaux aptes à transporter des données. Dans cette configuration, selon une troisième variante qui pourra être mis en œuvre alternativement ou cumulativement avec les précédentes variantes, le second terminal reçoit les signaux émis par l'émetteur, et extrait, desdites données émises, des données indiquant la destination d'envoi des données d'authentification.

Selon une quatrième variante, qui pourra être mis en œuvre alternativement ou cumulativement avec les précédentes variantes, le signal est un objet graphique affiché sur écran et le second terminal inclut un dispositif de prise de vue pour capturer l'objet.

L'appareil photo offre ainsi un moyen de communication entre les deux terminaux, l'ensemble constituant le deuxième réseau décrit ci-dessus.

Selon un premier aspect matériel, l'invention a trait à un terminal, dit premier terminal, tel que défini dans la revendication 7.

Selon un mode de mise en œuvre qui est le corollaire du mode décrit en référence au procédé de l'invention, le premier terminal est apte à communiquer avec ledit autre terminal au travers du premier réseau, et le premier terminal est en outre apte à transmettre des données audit autre terminal via un deuxième réseau. Dans cette configuration, le premier terminal comprend
- des moyens de demande de fourniture de données d'authentification à un autre terminal via le deuxième réseau ;
- des moyens de réception, via le premier réseau, d'un service basé sur les données d'authentification demandées.

Selon une première variante, qui est le corollaire de la première variante décrite en référence au procédé de l'invention, le premier terminal comprend des moyens pour inclure dans la demande de données d'authentification une adresse de destination sur le premier réseau pour l'envoi des données d'authentification.

Selon une deuxième variante, qui est le corollaire de la deuxième variante décrite en référence au procédé de l'invention, le premier terminal comprend
- des moyens de demande d'un identifiant de transaction à une entité apte à délivrer des identifiants de transaction,
- des moyens d'inclusion dans la demande de fourniture de données d'authentification dudit identifiant de transaction.

Selon un deuxième aspect matériel, l'invention a trait à un terminal, dit second terminal, tel que défini dans la revendication 10.

Selon un mode de mise en œuvre qui est le corollaire du mode décrit en référence au procédé de l'invention, le second terminal est apte à communiquer au travers d'au moins un réseau de communication et à recevoir des données depuis un autre terminal au travers d'un deuxième réseau. Dans cette configuration, le second terminal comprend
- des moyens de réception d'une demande de fourniture de données d'authentification issue d'un autre terminal depuis le deuxième réseau,
- des moyens de transmission desdites données d'authentification via le premier réseau afin d'être utilisées pour authentifier l'autre terminal.
- des moyens de réception d'une demande de fourniture de données d'authentification issue d'un autre terminal depuis le deuxième réseau,
- des moyens de transmission desdites données d'authentification via le premier réseau afin d'être utilisées pour authentifier l'autre terminal.

Selon une première variante, qui est le corollaire de la première variante décrite en référence au procédé de l'invention, le second terminal comprend des moyens d'extraction, de ladite demande de fourniture, de données d'authentification d'une adresse de destination sur le premier réseau, et des moyens de transmission desdites données d'authentification à ladite adresse de destination.

Selon une deuxième variante, qui est le corollaire de la deuxième variante décrite en référence au procédé de l'invention, le second terminal comprend des moyens d'extraction de ladite demande de fourniture de données d'authentification d'un identifiant de transaction, et des moyens de transmission dudit identifiant de transaction sur le premier réseau.

Selon un troisième aspect matériel, l'invention a trait à un premier programme d'ordinateur apte à être mis en œuvre sur le premier terminal défini ci-dessus, le programme comprenant des instructions de code qui, lorsque le programme est exécuté par un processeur, réalise une étape d'authentification basée sur une authentification de l'utilisateur réalisée relativement à un autre terminal, à savoir le deuxième terminal.

Selon un mode de mise en œuvre qui est le corollaire du mode décrit en référence au procédé de l'invention, le premier programme réalise les étapes suivantes :
- une étape de réception d'une demande de fourniture de données d'authentification issue du premier terminal via le deuxième réseau ;
- une étape de transmission de données d'authentification depuis le second terminal via le premier réseau.

Selon une première variante qui est le corollaire de la première variante décrite en référence au procédé de l'invention, ledit premier programme réalise en outre les étapes :
- d'inclusion dans ladite demande de fourniture de données d'authentification d'une adresse de destination sur le premier réseau,
- de transmission de la demande de fourniture de données d'authentification via le deuxième réseau.

Selon une deuxième variante, qui est le corollaire de ladite deuxième variante décrite ci-dessus, ledit premier programme réalise en outre les étapes
- de demande d'un identifiant de transaction,
- d'inclusion dudit identifiant dans la demande de fourniture de données d'authentification
- de transmission de la demande de fourniture incluant l'identifiant de transaction.

Selon un quatrième aspect matériel, l'invention a trait à un deuxième programme d'ordinateur apte à être mis en œuvre sur le second terminal défini ci-dessus, le programme comprenant des instructions de code qui, lorsque le programme est exécuté par un processeur, réalise une étape d'authentification d'un utilisateur UT du terminal, et une étape de transmission des données d'authentification résultantes à des fins d'authentification d'un autre terminal à savoir le premier terminal.

Selon une première variante qui est le corollaire de la première variante décrite en référence au procédé de l'invention, ledit deuxième programme réalise en outre les étapes :
- d'extraction de ladite demande de fourniture de données d'authentification d'une adresse de destination sur le premier réseau,
- de transmission desdites données d'authentification à ladite adresse de destination.

Selon une deuxième variante, qui est le corollaire de ladite deuxième variante décrite ci-dessus, ledit deuxième programme réalise en outre les étapes
- d'extraction de ladite demande de fourniture de données d'authentification d'un identifiant de transaction,
- de transmission dudit identifiant de transaction sur le premier réseau.

L'invention sera mieux comprise à la lecture de la description qui suit, donnée à titre d'exemple et faite en référence aux dessins annexés.

### Les figures :

La figure 1 représente un système informatique sur lequel est illustré un exemple de réalisation d'un procédé d'authentification selon l'invention.
La figure 2 représente une scène illustrant un premier exemple de réalisation.
La figure 3 est une vue schématique des échanges réalisés relativement au premier exemple de réalisation.
La figure 4 est une vue schématique d'un terminal afin d'illustrer un deuxième et un troisième exemple de réalisation.
Les figures 5a et 5b illustrent le deuxième exemple de réalisation, chaque figure étant représentative d'une scène à des instants différents.
La figure 6 est une vue schématique des échanges réalisés relativement au deuxième exemple de réalisation.
Les figures 7a et 7b illustrent un troisième exemple de réalisation, chaque figure étant représentative d'une scène à des instants différents.

### Description détaillée d'un exemple de réalisation illustrant l'invention

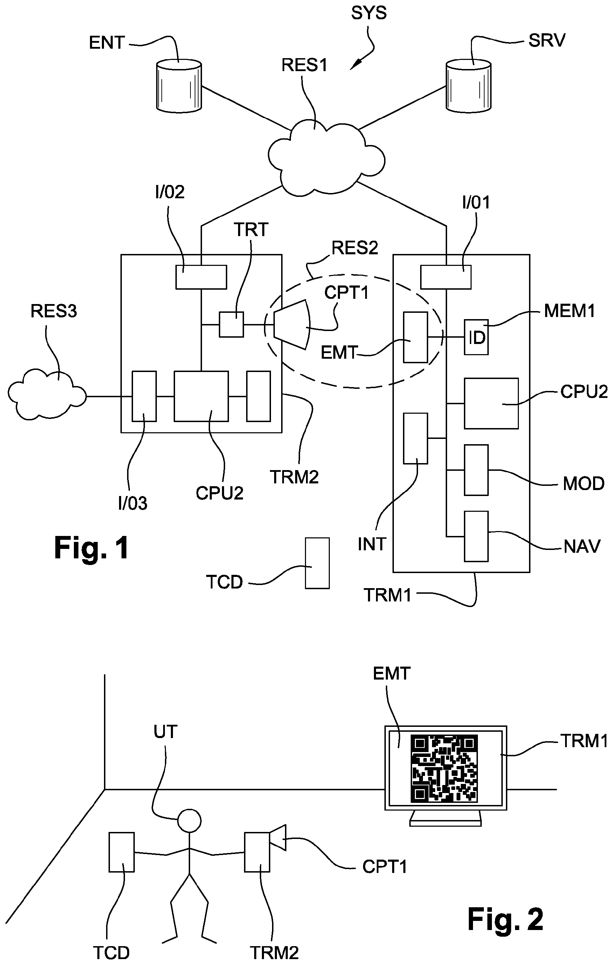

La figure 1 représente un système SYS comprenant un serveur SRV appartenant à un fournisseur de service et un terminal TRM1, dit premier terminal, connectés entre eux au moyen d'un réseau de communication RES1, dit premier réseau par la suite, tel qu'un réseau Internet.

Le système comprend aussi un second terminal TRM2 connecté au premier réseau RES1.

Le second terminal TRM2 est apte à recevoir des données issues du premier terminal via un deuxième réseau de courte portée. Un réseau de courte portée se rapporte ici à un réseau ayant une couverture limitée en distance. Dans ce contexte, le premier terminal peut communiquer des données en deçà d'une distance DIST donnée par l'intermédiaire du deuxième réseau RES2.

La couverture du deuxième réseau RES2 est choisie de telle sorte qu'une communication possible entre deux terminaux par le biais de ce deuxième réseau sera le témoin d'une proximité entre les deux terminaux en question et implicitement une proximité de l'utilisateur vis-à-vis des deux terminaux. Le deuxième réseau en question est par exemple un réseau RFiD (Radio Frequency Identification), un réseau Bluetooth.

Nous verrons dans la suite que ce deuxième réseau peut aussi être constitué par un générateur de code visuel et d'un dispositif de prise de vue capable de prendre une vue du code et d'en extraire une information. Un dispositif de prise de son, ou un émetteur de lumière peuvent aussi être utilisés comme émetteur de signaux, le code étant émis sous la forme d'un son ou de lumière, respectivement.

Plus généralement, le premier terminal inclus un émetteur apte à émettre des signaux transportant des données et le deuxième terminal inclus un capteur apte à capter les signaux, à savoir un microphone, un détecteur de mouvements, ou un capteur de lumière.

L'invention va être illustrée au moyen de plusieurs exemples à commencer par un premier exemple.

Dans ce premier exemple, le premier terminal TRM1 est une télévision comprenant un premier microprocesseur CPU1 apte à communiquer avec un module MOD apte à requérir auprès d'une entité ENT qui sera décrite dans la suite, un identifiant dit de transaction ID ; l'entité ENT est apte à générer un identifiant et à émettre cet identifiant au premier terminal. L'identifiant est indifféremment un code à deux dimensions appelé code 2D par l'homme du métier, des signaux sonores ou lumineux aptes à transporter des données. Rappelons ici qu'un code 2D est un pictogramme généralement en noir et blanc contenant de l'information.

Le premier microprocesseur CPU1 est aussi apte à communiquer avec une première mémoire MEM1 apte à stocker l'identifiant ID.

Le premier microprocesseur CPU1 est aussi apte à communiquer avec des moyens de restitution EMT pour la restitution du code. Dans notre exemple, les moyens de restitution sont un écran. L'invention ne se limite pas à ce type de moyens de restitution. Comme indiqué plus haut, un émetteur de son aurait aussi pu être utilisé pour émettre un signal représentatif d'un code.

Le premier microprocesseur CPU1 est aussi apte à communiquer avec des moyens d'interface INT, optionnels, pour communiquer avec une télécommande TCD apte à émettre des commandes via un clavier comprenant des touches à sélectionner. Les touches permettent notamment la sélection de chaînes de télévision, etc. Ces moyens d'interface seront utiles à l'illustration du premier mode de réalisation, les autres modes ne nécessitant pas une communication avec un moyen de commande tel que la télécommande.

Naturellement l'invention ne se limite pas aux terminaux équipés d'une télécommande mais s'étend à tout type de terminaux équipés ou non de moyens de commande.

Le premier microprocesseur CPU1 est aussi apte à communiquer avec des moyens d'entrée/sortie I/O1 pour assurer la communication sur le premier réseau.

Le premier terminal TRM1 comprend aussi optionnellement un navigateur NAV permettant une navigation sur Internet et un affichage de données sous forme de pages Internet. Dans notre exemple, le navigateur NAV est apte à émettre des requêtes sur le réseau Internet et à recevoir des réponses. Le navigateur sera utile à l'illustration du premier mode de réalisation décrit ci-dessous.

Dans notre exemple, le second terminal TRM2 est un téléphone dit de troisième génération. Ce second terminal est équipé dans notre exemple d'une carte SIM (Subscriber Identity Module). Ce module est apte à authentifier l'utilisateur du second terminal relativement à un troisième réseau RES3.

Par abus de langage et pour simplifier la lecture, il est indiqué dans le présent texte que l'utilisateur s'authentifie via le terminal. Il faut noter que, en toute rigueur l'authentification concerne la carte SIM et non l'utilisateur. Cependant, d'une manière générale, chaque carte SIM appartient à un seul et unique utilisateur, une authentification de la carte concernera donc également une authentification l'utilisateur.

Le téléphone TRM2 comprend en outre un microprocesseur CPU2, dit deuxième microprocesseur apte à communiquer avec des moyens de traitement TRT connectés à des moyens de réception de signaux CPT1 tels que des moyens de prise de vue ; les moyens de réceptions sont par exemple un appareil photo, un microphone, un accéléromètre, un capteur de lumière ; les moyens de traitement sont quant à eux par exemple une application informatique.

Le deuxième microprocesseur CPU2 est aussi apte à communiquer avec des moyens d'entrée/sortie I/O2 aptes à recevoir et à émettre des données sur le premier réseau RES1. Dans notre exemple le réseau Internet.

Le deuxième microprocesseur CPU2 est aussi apte à communiquer avec des moyens d'entrée sortie I/O3 pour la communication avec le troisième réseau RES3.

A noter les moyens de stockage MEM1 et MEM2 (dans TRM2) décrits ci-dessus sont quelconques ; ceux-ci sont par exemple une mémoire de type Flash, RAM, etc.

Dans notre exemple, le système comprend également une entité ENT capable de générer des codes 2D sur requête. Cette entité est connectée au premier réseau RES1.

Dans notre exemple, l'entité ENT a une adresse URL (Uniform Resource Locator) sur le réseau Internet. Cette entité agit comme tiers de confiance envers le premier terminal, le second terminal et le serveur SRV.

Le système comprend aussi un fournisseur de services SRV tel qu'un opérateur de télécommunication fournissant des services tels que l'accès à une zone, l'accès à des contenus multimédia, etc. Le fournisseur dispose de ressources informatiques telles qu'un serveur pour fournir ces services. Ce serveur est dans notre exemple connecté au premier réseau à savoir le réseau Internet.

Dans ce premier exemple, ainsi que dans les deux exemples qui suivent, le premier terminal TRM1, le second terminal TRM2, l'entité ENT et le fournisseur SRV sont donc reliés entre eux via le réseau Internet.

Dans les exemples qui suivent, on considère que le premier terminal et le second terminal ne sont pas appariés. Les deux terminaux ne se connaissent donc pas en ce sens que ni l'un ni l'autre ne dispose de moyens de reconnaissance de l'un ou de l'autre. Dans notre exemple, le premier terminal n'a aucun moyen de détecter de seconds terminaux dans son champ de couverture. De plus seuls les seconds terminaux ont la capacité de recevoir un signal issu d'un premier terminal TRM1. L'invention ne se limite pas à cet exemple. Même si cela ne présente pas un grand intérêt, l'invention peut naturellement être mise en œuvre sur des terminaux appairés et capables de communiquer entre eux.

Un exemple illustrant le procédé de l'invention est décrit ci-dessous. La figure 2 illustre un schéma représentant une scène. Dans cette scène, un utilisateur se trouve dans une pièce, équipé de son téléphone TRM2. Dans cette pièce se trouve une télévision TRM1 connectée au réseau Internet. Comme on l'a vu dans ce qui précède, la télévision comprend une interface INT manipulable par le biais d'une télécommande TCD. La télécommande comporte des touches permettant la sélection de commandes aptes à être émises vers le téléviseur TRM1 pour traitement.

Le but est, pour l'utilisateur, de s'authentifier auprès du fournisseur de services SRV afin de recevoir des services personnalisés comme la possibilité d'utiliser un service sur le premier terminal TRM1.

L'exemple de réalisation comprend deux phases
- une première phase PH1 au cours le laquelle l'utilisateur du téléphone s'authentifie par exemple auprès d'un opérateur de télécommunication via le second terminal, par exemple via une carte SIM incluse dans le terminal.
- une deuxième phase PH2 au cours de laquelle les données d'authentification associées à la première phase sont utilisées pour authentifier la télévision TRM1.

A noter que la première phase peut être réalisée avant la deuxième phase ou au cours de la deuxième phase.

Lors de la première phase PH1, l'utilisateur s'authentifie sur le troisième réseau RES3 par le biais du téléphone TRM2. Il en résulte un stockage d'une preuve d'authentification, dans notre exemple un "cookie", dans la deuxième mémoire MEM2. L'utilisateur du téléphone peut par la suite utiliser cette preuve pour utiliser des services en ligne sur la télévision lorsque le fournisseur de services reconnaît la preuve en question come preuve suffisante.

Rappelons ici qu'en informatique un cookie est défini par le protocole de communication HTTP comme étant une suite d'informations envoyée par un serveur HTTP à un client HTTP, que ce dernier retourne lors de chaque interrogation du même serveur http sous certaines conditions. Le cookie est envoyé dans l'en-tête HTTP par le serveur web au navigateur web qui le renvoie inchangé à chaque fois qu'il accède au serveur. Un cookie peut être utilisé pour une authentification, une session (maintenance d'état), et pour stocker une information spécifique sur l'utilisateur.

A noter que la preuve d'authentification, à savoir le cookie, n'est pas forcément stockée dans la mémoire MEM2 du terminal. La preuve d'authentification peut être directement transmise à l'entité ENT sans qu'il soit nécessaire de la stocker dans le second terminal TRM2.

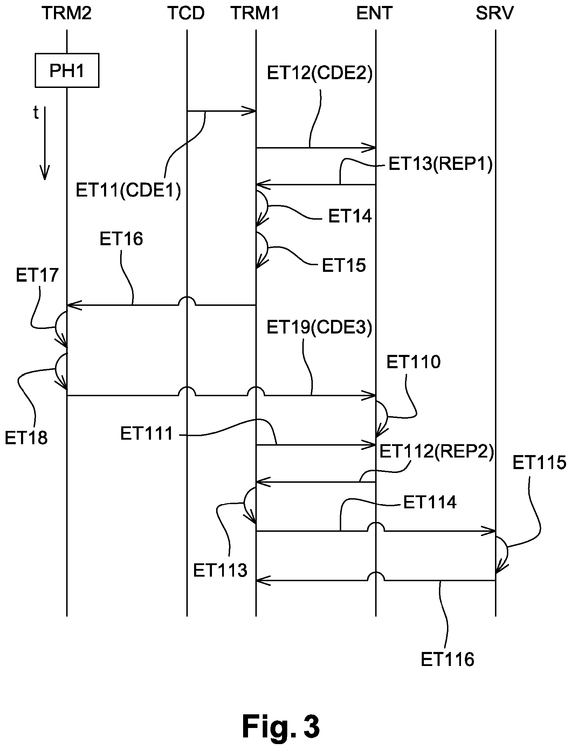

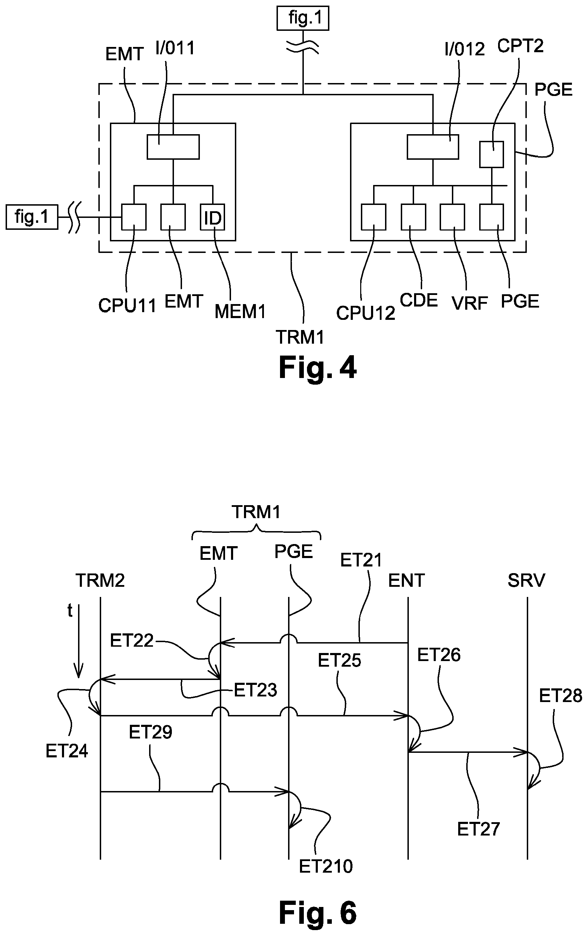

La deuxième phase PH2 se décompose en plusieurs étapes ET11 à ET115. Ces étapes sont décrites en référence à la figure 3 sur laquelle sont représentés des axes illustrant l'échange de données qui a lieu entre le premier terminal, le second terminal, l'entité, le fournisseur, respectivement. Sur cette figure, ainsi que la figure 6 un axe temporel indique le sens d'exécution des étapes. Sur ces mêmes figures 3 et 6 un échange de données est symbolisé par une flèche ayant une origine et une extrémité, l'origine étant associé à l'émetteur d'un message, l'extrémité étant associé au destinataire du message. Aussi, une flèche ayant une origine et une extrémité sur un même axe représente un traitement interne au dispositif.

Lors d'une première étape ET11, l'utilisateur UT utilise la télécommande TCD et sélectionne une commande CDE1, dite première commande, apte à commander une demande d'authentification. A cet instant le premier microprocesseur reçoit la commande CDE1 via l'interface INT.

Lors d'une deuxième étape ET12, le premier microprocesseur CPU1 connaissant l'adresse URL de l'entité sur le premier réseau RES1, transmet à l'entité ENT une commande CDE2 requérant la génération d'un code 2D incluant comme informations l'adresse URL de l'entité ENT et un identifiant de transaction ID.

L'entité ENT génère un code 2D et le transmet dans une réponse REP1 en retour à la télévision TRM1 lors d'une troisième étape ET13.

Lors d'une quatrième étape ET14, le premier microprocesseur CPU1 reçoit la réponse, la stocke accessoirement dans la mémoire MEM1, et commande l'affichage sur l'écran EMT du code 2D reçu.

Lors d'une cinquième étape ET15, l'écran affiche le code 2D.

Lors d'une sixième étape ET16, l'utilisateur utilise son téléphone et photographie le code 2D affiché sur l'écran EMT.

Lors d'une septième étape ET17, les moyens de prise de vue CPT1 capturent la photographie, et la transmettent lors d'une huitième étape ET18 aux moyens de traitement TRT. Les moyens de traitement décodent le code 2D et déduisent les informations décodées à savoir l'adresse URL de l'entité ENT et l'identifiant de transaction ID.

Lors d'une neuvième étape ET19, le deuxième microprocesseur CPU2, connaissant l'adresse de l'entité ENT, commande par le biais d'une troisième commande CDE3 l'envoi du cookie et l'identifiant ID à l'entité ENT.

Lors d'une dixième étape ET110, l'entité ENT reçoit la troisième commande CDE3 et extrait les données incluses dans cette troisième commande à savoir l'identifiant de transaction ID et une preuve d'authentification de l'utilisateur (ex: cookie) .

Lors du déroulement des étapes de cette deuxième phase, dans notre exemple, le navigateur présent sur la télévision TRM1 envoie à intervalle régulier des requêtes d'interrogation destinées à l'entité ENT. Ces requêtes d'interrogation ont pour fonction de demander à l'entité si un cookie a été reçu relativement à l'identifiant de transaction ID.

A noter qu'une autre façon peut être utilisée en lieu et place des requêtes d'interrogations répétées. Par exemple, l'entité peut inclure des moyens aptes à notifier à la télévision la réception d'un cookie depuis le téléphone TRM1. Dans cette configuration, la télévision est équipée d'un module de réception de notification (non représenté sur les figures).

Lors d'une onzième étape ET111, l'entité ENT reçoit une requête d'interrogation issue du navigateur NAV présent sur la télévision et répond au moyen d'une réponse REP2 lors d'une douzième étape ET112, la réponse incluant le cookie.

Lors d'une treizième étape ET113, la télévision reçoit le cookie et le stocke en mémoire.

Lors d'une quatorzième étape ET114, la télévision transmet au fournisseur SRV le cookie.

Lors d'une quinzième étape ET115, Le fournisseur SRV reçoit le cookie comme preuve d'authentification et fournit le service au premier terminal lors d'une seizième étape ET116 si le cookie est accepté comme preuve d'authentification de l'utilisateur UT.

Le format du cookie fourni par le téléphone peut ne pas convenir au fournisseur. Selon une variante, un module présent dans la télévision peut être prévu pour transformer ce format en un format accepté par le fournisseur.

A noter aussi que l'entité ENT peut faire partie intégrante du serveur SRV ou de la télévision TRM1.

L'invention ne se limite pas à l'exemple décrit ci-dessus. D'autres exemples illustrent dans la suite deux autres exemples de réalisation.

Dans ces exemples, en référence à la figure 4, le premier terminal TRM2 se décompose en deux parties.

Une première partie EMT inclut un microprocesseur CPU11 relié par l'intermédiaire d'un bus de données aux moyens de restitution EMT, aux moyens de mémorisation MEM1 stockant l'identifiant de transaction ID, aux moyens d'entrée sortie I/O11 permettant au microprocesseur CPU11 de communiquer via le premier réseau.

Une deuxième partie PGE inclut un microprocesseur CPU12 relié par l'intermédiaire d'un bus de données à des moyens de vérifications d'un droit d'accès, à des moyens de captures CPT2, par exemple des moyens de prise de vue, à des moyens de commande CDE pour commander une autorisation par exemple un accès à une zone telle qu'une salle de cinéma, à des moyens d'entrée sortie I/O12 permettant au microprocesseur CPU12 de communiquer via le premier réseau RES1.

L'invention peut être illustrée à la base d'un deuxième exemple de réalisation dans lequel le premier terminal TRM2 est un terminal apte à émettre des signaux contenant des données, les signaux étant par exemple des signaux lumineux ou sonores en lieu et place d'un code 2D.

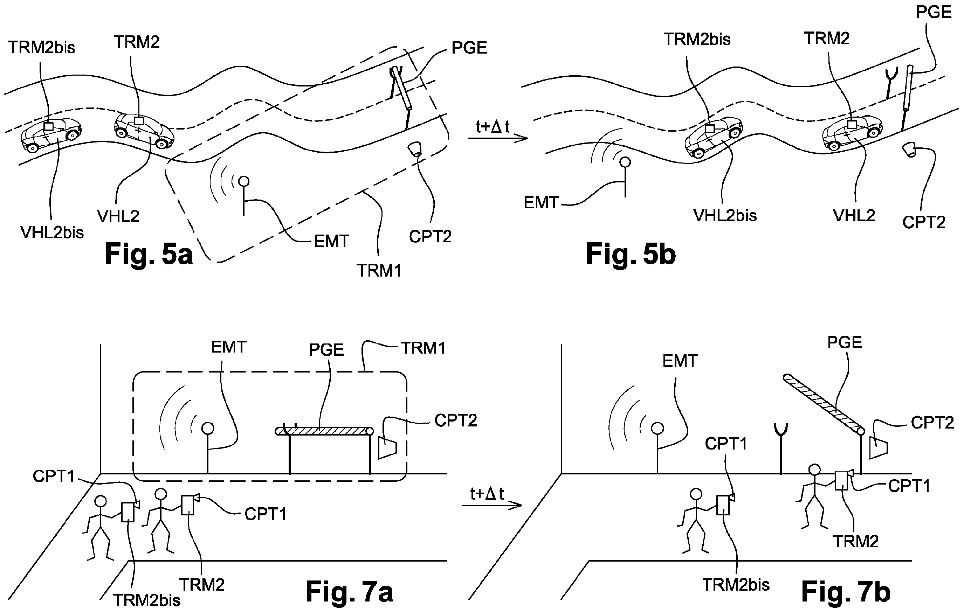

Le deuxième exemple est illustré en référence aux figures 5a et 5b représentant une même scène à des instants différents à savoir à un instant "t" et à un instant ultérieur "t+Δ*t*", respectivement.

Dans ce deuxième exemple, les signaux sont répétés constamment. De ce fait, dans notre exemple, l'utilisateur n'a pas à solliciter les moyens EMT pour recevoir des données depuis l'émetteur EMT.

La scène est la suivante : deux utilisateurs équipés d'un téléphone respectif se déplace au moyen d'un véhicule respectif, à savoir un premier véhicule VHL2 et un deuxième véhicule VHL2bis, sur une route sur laquelle un péage PGE est prévu. Dans ce mode de réalisation, les véhiculent se dirigent vers le péage PGE. Les étapes du procédé sont les suivantes.

On suppose ici que la première phase PH1 décrite ci-dessus a eu lieu.

Dans ce deuxième exemple, le premier terminal se décompose en une première partie incluant un émetteur de signaux sonores en lieu et place d'une écran restituant un code 2D, et en une deuxième partie incluant une barrière dont l'ouverture est apte à être commandée à distance par le fournisseur de services SRV. Dans notre exemple, la barrière est couplée à un dispositif de prise de vue CPT2 apte par exemple à photographier un véhicule pour identifier le véhicule en question par exemple au moyen de sa plaque d'immatriculation.

Encore une fois, rappelons que, dans la suite, par abus de langage et pour simplifier la lecture, il est indiqué que le terminal s'authentifie. Pour être plus précis, on devrait dire que c'est l'utilisateur qui s'authentifie auprès du service via le terminal.

La deuxième phase PH2 se décompose en plusieurs étapes ET21 à ET29. Dans notre exemple, les étapes qui suivent vont s'exécuter sur chaque terminal TRM2 et TRM2bis passant devant l'émetteur EMT. Pour simplifier l'exposé de l'invention, nous nous intéresserons donc à un seul terminal à savoir le terminal TRM2. la figure 6 illustre l'échange des données au cours de ce deuxième exemple. Sur cette figure 6, comme sur la figure 3, est représenté l'échange qui a lieu entre le premier terminal, le second terminal, l'entité, le fournisseur. Sur cette figure 6, un axe temporel indique le sens d'exécution des étapes.

Lors d'une première étape ET21, le microprocesseur CPU11 de l'émetteur EMT reçoit depuis l'entité ENT un identifiant de transaction ID et le stocke par exemple dans la mémoire MEM1.

Lors d'une deuxième étape ET22, l'émetteur EMT transmet des signaux sonores aptes à transporter comme données l'adresse ULR de l'entité ENT et l'identifiant de transaction reçu.

Lors d'une troisième étape ET23, les moyen de réception, à savoir le microphone installé dans le second terminal TRM2, reçoivent les signaux sonores par l'intermédiaire d'un microphone.

Lors d'une quatrième étape ET24, les moyens de réception CPT1 transmettent les signaux reçus aux moyens de traitement TRT. Les moyens de traitement décodent les signaux et déduisent les informations décodées à savoir l'adresse URL de l'entité ENT et l'identifiant de transaction ID.

Lors d'une cinquième étape ET25, le deuxième microprocesseur CPU2, connaissant l'adresse URL de l'entité ENT, commande l'envoi d'une preuve d'authentification de l'utilisateur à savoir dans notre exemple un cookie présent dans le second terminal à l'entité ENT ; ainsi que par exemple un identifiant apte à identifier le second terminal par exemple l'identifiant MSISDN (Mobile Subscriber ISDN Number) du second terminal.

Lors d'une sixième étape ET26, l'entité ENT reçoit la commande et extrait les données incluses dans cette commande à savoir l'identifiant de transaction ID et la preuve d'authentification de l'utilisateur (ex: cookie).

Lors d'une septième étape ET27, l'entité ENT envoie au serveur SRV un message indiquant que l'utilisateur est bien authentifié et ajoute dans le message l'identifiant MSISDN.

Lors d'une huitième étape ET28, le serveur recherche dans une base de données un numéro de plaque d'immatriculation correspondant à l'identifiant MSISDN reçu.

Lors d'une neuvième étape ET29, les moyens de prise de vue CPT2 photographient les différents numéros de plaques d'immatriculation de véhicules situés à une barrière de péage PGE, l'une après l'autre, et autorise l'ouverture de la barrière, lors d'une dixième étape ET210, si le numéro issu de la correspondance coïncide avec le numéro photographié.

Un troisième exemple de réalisation peut être celui d'un accès à une salle de cinéma. L'exemple est illustré en référence aux figures 7a et 7b représentants une même scène à des instants différents à savoir à un instant "t" et à un instant "t+Δ*t*", respectivement.

Deux utilisateurs équipés de terminaux respectifs TRM2 et TRM2bis se situent dans un hall à l'entrée d'une salle de cinéma. Dans notre exemple le hall comprend un émetteur EMT aptes à émettre par exemple des signaux lumineux capables de transporter des données à savoir l'adresse URL de l'entité ENT et l'identifiant de transaction ID.

Les étapes sont les mêmes que pour le deuxième exemple à la différence que l'entité ENT après réception de l'identifiant de transaction ID depuis un second terminal, émet un ticket à destination des seconds terminaux TRM2 et TRM2bis, par exemple sous forme de code 2D, que présentera l'utilisateur concerné devant un portillon d'entrée en lieu et place d'une barrière de péage. Dans cette configuration, à l'instant "t" un second terminal TRM2 entre dans le champ de l'émetteur EMT et reçoit une URL désignant une ressource de l'entité. Le second terminal TRM2 envoie ensuite à l'entité ENT (via l'URL) son identifiant MSISDN et reçoit un ticket d'entrée en retour de la part de l'entité ENT.

Ensuite, à un instant ultérieur "t+Δ*t*", le second terminal TRM2 situé à proximité du portillon affiche sur son écran le ticket que les moyens de prise de vue CPT2 photographient.

Les moyens de prise de vue CPT2 capturent les tickets de chaque terminal TRM2 et TRM2bis les uns après les autres et autorise l'ouverture de la barrière si le numéro issu de la correspondance coïncide avec le numéro photographié.

Le premier terminal TRM1, plus précisément la deuxième partie PGE, transmet ensuite au serveur SRV le ticket pour vérification de la validité du ticket. Si le ticket est valide, et accessoirement une vérification de la solvabilité du compte associé à l'identifiant MSISDN, le serveur transmet une commande d'ouverture au portillon afin que l'utilisateur du second terminal entre dans la salle de cinéma.

Les deux derniers exemples ont pour point commun que les signaux émis par l'émetteur EMT sont les mêmes sur une période de temps donnée et sont reçus par une pluralité de deuxièmes terminaux TRM2 TRM2bis pendant cette période.

A noter aussi que l'utilisateur peut être une personne physique ou une personne morale.

A noter aussi que la distance de couverture de l'émetteur associé au premier terminal TRM1 est choisie de telle sorte qu'elle assure la co-localisation des deux terminaux TRM1 et TRM2. La co-localisation doit être adaptée au contexte, par exemple quelques centimètres pour un usage domestique, quelques mètres pour un usage urbain.

## Revendications

1. Procédé d'authentification d'un utilisateur (UT) d'un terminal (TRM1), dit premier terminal, apte à communiquer avec un fournisseur de services (SRV) au travers d'un premier réseau de communication (RES1), ledit fournisseur requérant une authentification de l'utilisateur du premier terminal avant une fourniture d'un service au premier terminal, caractérisé en qu'il comprend une étape d'authentification préalable d'un deuxième terminal auprès d'un opérateur de télécommunications , une étape de stockage des données d'authentification dans le deuxième terminal, et en ce que le premier terminal transmet à destination du deuxième terminal (TRM2), via un deuxième réseau de communication (RES2), une demande de fourniture de données d'authentification requérant au deuxième terminal (TRM2) de transmettre, à destination d'une entité (ENT) distincte de l'opérateur de télécommunications, les données d'authentification stockées dans le second terminal relatives à l' authentification réalisée relativement au second terminal (TRM2).

2. Procédé selon la revendication 1, **caractérisé en ce que** le premier et le second terminal sont aptes à communiquer au travers du premier réseau de communication (RES1), ledit second terminal (TRM2) étant apte à recevoir, depuis le premier terminal (TRM1), des données via un deuxième réseau de communication (RES2) de courte portée, et **en ce que** le procédé comprend les étapes suivantes :
- une étape de réception, par le second terminal (TRM2), d'une demande de fourniture de données d'authentification issue du premier terminal (TRM1) via le deuxième réseau (RES2);
- une étape de transmission de données d'authentification depuis le second terminal (TRM2) via le premier réseau (RES1).

3. Procédé d'authentification selon la revendication 2, **caractérisé en ce que** la demande de données d'authentification issue du premier terminal inclut une adresse de destination, sur le premier réseau (RES1), pour l'envoi des données d'authentification.

4. Procédé d'authentification selon la revendication 2 ou 3, **caractérisé en ce que** l'étape de demande fourniture de données d'authentification est précédée d'une étape de demande par le premier terminal (TRM1) d'un identifiant de transaction à une entité (ENT) apte à délivrer des identifiants de transaction (ID), et **en ce que** les données transmises par la suite inclut l'identifiant de transaction.

5. Procédé d'authentification selon la revendication 4, **caractérisé en ce que**, le premier terminal (TRM1) étant équipé d'un émetteur de signaux (EMT) aptes à transporter des données, le second terminal (TRM2) reçoit les signaux émis par l'émetteur, et extrait, desdites données, des données indiquant la destination d'envoi des données d'authentification.

6. Procédé d'authentification selon la revendication 5, **caractérisé en ce que** le signal est un objet graphique affiché sur écran (EMT) et **en ce que** le second terminal (TRM2) inclut un dispositif de prise de vue (CPT1) pour capturer l'objet.

7. Terminal (TRM1) apte à utiliser un service offert par un fournisseur de service après authentification, ledit terminal étant apte à recevoir un service au travers d'un réseau de communication (RES1), **caractérisé en ce qu'**il comprend des moyens pour
- transmettre une demande de fourniture de données d'authentification requérant à un autre terminal (TRM2) de transmettre, à destination d'une entité (ENT), des données relatives à une authentification préalablement réalisée relativement à cet autre terminal auprès d'un opérateur de télécommunication distinct de l'entité (ENT).

8. Terminal (TRM1) selon la revendication 7, **caractérisé en ce qu'**il comprend en outre des moyens pour inclure dans la demande de données d'authentification une adresse de destination sur le premier réseau pour l'envoi des données d'authentification.

9. Terminal (TRM1) selon la revendication 8, **caractérisé en ce qu'**il comprend en outre
- des moyens de demande d'un identifiant de transaction à une entité apte à délivrer des identifiants de transaction,
- des moyens d'inclusion dans la demande de fourniture de données d'authentification dudit identifiant de transaction.

10. Terminal (TRM2) apte à communiquer au travers d'au moins un réseau de communication (RES1), ledit terminal (TRM2) comprenant
- des moyens aptes à réaliser une authentification préalable du terminal auprès d'un opérateur de télécommunications;
des moyens aptes à stocker les données d'authentification relatives à ladite authentification;
- des moyens aptes à recevoir une demande requérant au terminal (TRM2) de transmettre, à destination d'une entité (ENT) distincte de l'opérateur de télécommunications, les données d'authentification relatives à l'authentification réalisée relativement au terminal (TRM2),
- des moyens pour transmettre les données d'authentification résultantes à des fins d'authentification d'un autre terminal (TRM1).

11. Terminal (TRM2) selon la revendication 10, ledit terminal étant apte à communiquer au travers d'au moins un réseau de communication (RES1) et à recevoir des données depuis un autre terminal (TRM1) au travers d'un deuxième réseau (RES2), **caractérisé en ce qu'**il comprend
- des moyens de réception d'une demande de fourniture de données d'authentification issue d'un autre terminal depuis le deuxième réseau (RES2),
- des moyens de transmission desdites données d'authentification via le premier réseau (RES1) afin d'être utilisées pour authentifier l'autre terminal.

12. Terminal (TRM2) selon la revendication 11, **caractérisé en ce qu'**il comprend en outre des moyens d'extraction, de ladite demande de fourniture de données d'authentification, d'une adresse de destination sur le premier réseau, et des moyens de transmission desdites données d'authentification à ladite adresse de destination.

13. Terminal (TRM2) selon la revendication 12, **caractérisé en ce qu'**il comprend en outre des moyens d'extraction de ladite demande de fourniture de données d'authentification d'un identifiant de transaction, et des moyens de transmission dudit identifiant de transaction sur le premier réseau.

14. Programme d'ordinateur apte à être mis en œuvre sur un terminal (TRM1) tel que défini dans la revendication 7, le programme comprenant des instructions de code qui, lorsque le programme est exécuté par un processeur, réalise une étape d'authentification basée sur une authentification de l'utilisateur réalisée relativement à un autre terminal (TRM2).

15. Programme d'ordinateur apte à être mis en œuvre sur un terminal (TRM2) tel que défini dans la revendication 11, le programme comprenant des instructions de code qui, lorsque le programme est exécuté par un processeur, réalise une étape d'authentification d'un utilisateur (UT) du terminal, et une étape de transmission des données d'authentification résultantes à des fins d'authentification d'un autre terminal (TRM1).

## Patentansprüche

1. Verfahren zur Authentifizierung eines Benutzers (UT) eines Endgeräts (TRM1), erstes Endgerät genannt, das über ein erstes Kommunikationsnetzwerk (RES1) mit einem Dienstanbieter (SRV) kommunizieren kann, wobei der Anbieter vor einer Lieferung eines Dienstes an das erste Endgerät eine Authentifizierung des Benutzers des ersten Endgeräts fordert, **dadurch gekennzeichnet, dass** es einen vorhergehenden Authentifizierungsschritt eines zweiten Endgeräts bei einem Telekommunikationsbetreiber, einen Schritt des Speicherns der Authentifizierungsdaten im zweiten Endgerät enthält, und dass das erste Endgerät an das zweite Endgerät (TRM2) über ein zweites Kommunikationsnetzwerk (RES2) eine Anforderung zur Lieferung von Authentifizierungsdaten überträgt, die vom zweiten Endgerät (TRM2) fordert, an eine Entität (ENT) anders als der Telekommunikationsbetreiber die im zweiten Endgerät gespeicherten Authentifizierungsdaten bezüglich der bezüglich des zweiten Endgeräts (TRM2) durchgeführten Authentifizierung zu übertragen.

2. Verfahren nach Anspruch 1, **dadurch gekennzeichnet, dass** das erste und das zweite Endgerät über das erste Kommunikationsnetzwerk (RES1) kommunizieren können, das zweite Endgerät (TRM2) vom ersten Endgerät (TRM1) Daten über ein zweites Kommunikationsnetzwerk (RES2) kurzer Reichweite empfangen kann, und dass das Verfahren die folgenden Schritte enthält:
- einen Schritt des Empfangs, durch das zweite Endgerät (TRM2), einer vom ersten Endgerät (TRM1) stammenden Anforderung zur Lieferung von Authentifizierungsdaten über das zweite Netzwerk (RES2);
- einen Schritt der Übertragung von Authentifizierungsdaten vom zweiten Endgerät (TRM2) über das erste Netzwerk (RES1).

3. Authentifizierungsverfahren nach Anspruch 2, **dadurch gekennzeichnet, dass** die vom ersten Endgerät stammende Anforderung von Authentifizierungsdaten eine Zieladresse im ersten Netzwerk (RES1) für das Senden der Authentifizierungsdaten enthält.

4. Authentifizierungsverfahren nach Anspruch 2 oder 3, **dadurch gekennzeichnet, dass** vor dem Schritt der Anforderung zur Lieferung von Authentifizierungsdaten ein Schritt der Anforderung einer Transaktionskennung durch das erste Endgerät (TRM1) an eine Entität (ENT) liegt, die Transaktionskennungen (ID) liefern kann, und dass die anschließend übertragenen Daten die Transaktionskennung enthalten.

5. Authentifizierungsverfahren nach Anspruch 4, **dadurch gekennzeichnet, dass**, da das erste Endgerät (TRM1) mit einem Sender von Signalen (EMT) ausgestattet ist, die Daten transportieren können, das zweite Endgerät (TRM2) die vom Sender gesendeten Signale empfängt und aus den Daten Daten entnimmt, die das Sendeziel der Authentifizierungsdaten anzeigen.

6. Authentifizierungsverfahren nach Anspruch 5, **dadurch gekennzeichnet, dass** das Signal ein auf dem Bildschirm (EMT) angezeigtes grafisches Objekt ist, und dass das zweite Endgerät (TRM2) eine Bildaufnahmevorrichtung (CPT1) zum Erfassen des Objekts umfasst.

7. Endgerät (TRM1), das einen von einem Dienstanbieter angebotenen Dienst nach Authentifizierung nutzen kann, wobei das Endgerät einen Dienst über ein Kommunikationsnetzwerk (RES1) empfangen kann, **dadurch gekennzeichnet, dass** es Einrichtungen enthält, um
- eine Anforderung zur Lieferung von Authentifizierungsdaten zu übertragen, die von einem anderen Endgerät (TRM2) fordert, Daten bezüglich einer vorher bei einem Telekommunikationsbetreiber anders als die Entität (ENT) durchgeführten Authentifizierung bezüglich dieses anderen Endgeräts an eine Entität (ENT) zu übertragen.

8. Endgerät (TRM1) nach Anspruch 7, **dadurch gekennzeichnet, dass** es außerdem Einrichtungen enthält, um in die Anforderung von Authentifizierungsdaten eine Zieladresse im ersten Netzwerk zum Senden der Authentifizierungsdaten einzufügen.

9. Endgerät (TRM1) nach Anspruch 8, **dadurch gekennzeichnet, dass** es außerdem enthält
- Einrichtungen zur Anforderung einer Transaktionskennung von einer Entität, die Transaktionskennungen liefern kann,
- Einrichtungen zum Einfügen von Authentifizierungsdaten der Transaktionskennung in die Lieferanforderung.

10. Endgerät (TRM2), das über mindestens ein Kommunikationsnetzwerk (RES1) kommunizieren kann, wobei das Endgerät (TRM2) enthält
- Einrichtungen, die eine vorhergehende Authentifizierung des Endgeräts bei einem Telekommunikationsbetreiber durchführen können;
- Einrichtungen, die die Authentifizierungsdaten bezüglich der Authentifizierung speichern können;
- Einrichtungen, die eine Anforderung empfangen können, die vom Endgerät (TRM2) fordert, die Authentifizierungsdaten bezüglich der bezüglich des Endgeräts (TRM2) durchgeführten Authentifizierung an eine Entität (ENT) anders als der Telekommunikationsbetreiber zu übertragen,
- Einrichtungen zur Übertragung der resultierenden Authentifizierungsdaten zum Zweck der Authentifizierung eines anderen Endgeräts (TRM1).

11. Endgerät (TRM2) nach Anspruch 10, wobei das Endgerät über mindestens ein Kommunikationsnetzwerk (RES1) kommunizieren und Daten von einem anderen Endgerät (TRM1) über ein zweites Netzwerk (RES2) empfangen kann, **dadurch gekennzeichnet, dass** es enthält
- Einrichtungen zum Empfang einer von einem anderen Endgerät stammenden Anforderung zur Lieferung von Authentifizierungsdaten ausgehend vom zweiten Netzwerk (RES2),
- Einrichtungen zur Übertragung der Authentifizierungsdaten über das erste Netzwerk (RES1), damit sie zur Authentifizierung des anderen Endgeräts verwendet werden.

12. Endgerät (TRM2) nach Anspruch 11, **dadurch gekennzeichnet, dass** es außerdem Entnahmeeinrichtungen, aus der Anforderung zur Lieferung von Authentifizierungsdaten, einer Zieladresse im ersten Netzwerk und Einrichtungen zur Übertragung der Authentifizierungsdaten an die Zieladresse enthält.

13. Endgerät (TRM2) nach Anspruch 12, **dadurch gekennzeichnet, dass** es außerdem Einrichtungen zur Entnahme einer Transaktionskennung aus der Anforderung zur Lieferung von Authentifizierungsdaten und Einrichtungen zur Übertragung der Transaktionskennung auf dem ersten Netzwerk enthält.

14. Computerprogramm, das auf einem wie in Anspruch 7 definierten Endgerät (TRM1) durchgeführt werden kann, wobei das Programm Codeanweisungen enthält, die, wenn das Programm von einem Prozessor ausgeführt wird, einen Authentifizierungsschritt basierend auf einer Authentifizierung des Benutzers durchführen, die bezüglich eines anderen Endgeräts (TRM2) durchgeführt wird.

15. Computerprogramm, das auf einem wie in Anspruch 11 definierten Endgerät (TRM2) durchgeführt werden kann, wobei das Programm Codeanweisungen enthält, die, wenn das Programm von einem Prozessor ausgeführt wird, einen Authentifizierungsschritt eines Benutzers (UT) des Endgeräts und einen Schritt der Übertragung der resultierenden Authentifizierungsdaten zum Zweck der Authentifizierung eines anderen Endgeräts (TRM1) durchführen.

## Claims

1. Method for authenticating a user (UT) of a terminal (TRM1), known as first terminal, which is capable of communicating with a service provider (SRV) via a first communication network (RES1), said provider requiring authentication of the user of the first terminal before providing a service to the first terminal, **characterized in that** it comprises a step of performing preliminary authentication of a second terminal with a telecommunications operator, a step of storing the authentication data in the second terminal, and **in that** the first terminal sends to the second terminal (TRM2), via a second communication network (RES2), a request for the provision of authentication data that requires the second terminal (TRM2) to send to an entity (ENT) distinct from the telecommunications operator the authentication data that are stored in the second terminal and relate to the authentication performed with respect to the second terminal (TRM2) .

2. Method according to Claim 1, **characterized in that** the first and the second terminal are capable of communicating via the first communication network (RES1), said second terminal (TRM2) being capable of receiving data from the first terminal (TRM1) via a second, short-range communication network (RES2), and **in that** the method comprises the following steps:
- a step of the second terminal (TRM2) receiving a request for the provision of authentication data, which request originates from the first terminal (TRM1), via the second network (RES2);
- a step of sending authentication data from the second terminal (TRM2) via the first network (RES1) .

3. Authentication method according to Claim 2, **characterized in that** the request for authentication data, which request originates from the first terminal, includes a destination address on the first network (RES1) for the dispatch of the authentication data.

4. Authentication method according to Claim 2 or 3, **characterized in that** the step of requesting the provision of authentication data is preceded by a step of the first terminal (TRM1) requesting a transaction identifier from an entity (ENT) that is capable of delivering transaction identifiers (ID), and **in that** the data subsequently sent include the transaction identifier.

5. Authentication method according to Claim 4, **characterized in that**, the first terminal (TRM1) being equipped with a transmitter (EMT) that transmits signals capable of carrying data, the second terminal (TRM2) receives the signals transmitted by the transmitter and extracts, from said data, data indicating the destination for the dispatch of the authentication data.

6. Authentication method according to Claim 5, **characterized in that** the signal is a graphical object displayed on a screen (EMT) and **in that** the second terminal (TRM2) includes an image capture device (CPT1) for capturing the object.

7. Terminal (TRM1) capable of using a service offered by a service provider after authentication, said terminal being capable of receiving a service via a communication network (RES1), **characterized in that** it comprises means for
- sending a request for the provision of authentication data that requires another terminal (TRM2) to send to an entity (ENT) data relating to an authentication performed beforehand with respect to this other terminal with a telecommunications operator distinct from the entity (ENT).

8. Terminal (TRM1) according to Claim 7, **characterized in that** it further comprises means for including, in the request for authentication data, a destination address on the first network for the dispatch of the authentication data.

9. Terminal (TRM1) according to Claim 8, **characterized in that** it further comprises
- means for requesting a transaction identifier from an entity capable of delivering transaction identifiers,
- means for including said transaction identifier in the request for the provision of authentication data.

10. Terminal (TRM2) capable of communicating via at least one communication network (RES1), said terminal (TRM2) comprising
- means capable of performing a preliminary authentication of the terminal with a telecommunications operator ;
- means capable of storing the authentication data relating to said authentication;
- means capable of receiving a request that requires the terminal (TRM2) to send to an entity (ENT) distinct from the telecommunications operator the authentication data relating to the authentication performed with respect to the terminal (TRM2);
- means for sending the resulting authentication data for the purpose of authenticating another terminal (TRM1).

11. Terminal (TRM2) according to Claim 10, said terminal being capable of communicating via at least one communication network (RES1) and of receiving data from another terminal (TRM1) via a second network (RES2), **characterized in that** it comprises
- means for receiving a request for the provision of authentication data, which request originates from another terminal, from the second network (RES2),
- means for sending said authentication data via the first network (RES1) in order to be used to authenticate the other terminal.

12. Terminal (TRM2) according to Claim 11, **characterized in that** it further comprises means for extracting a destination address on the first network from said request for the provision of authentication data, and means for sending said authentication data to said destination address.

13. Terminal (TRM2) according to Claim 12, **characterized in that** it further comprises means for extracting a transaction identifier from said request for the provision of authentication data, and means for sending said transaction identifier on the first network.

14. Computer program capable of being implemented on a terminal (TRM1) as defined in Claim 7, the program comprising code instructions which, when the program is executed by a processor, perform an authentication step based on an authentication of the user performed with respect to another terminal (TRM2).

15. Computer program capable of being implemented on a terminal (TRM2) as defined in Claim 11, the program comprising code instructions which, when the program is executed by a processor, perform a step of authenticating a user (UT) of the terminal, and a step of sending the resulting authentication data for the purpose of authenticating another terminal (TRM1).
